# EUROPÄISCHE PATENTSCHRIFT

(11) **EP 3 830 534 B1**
(45) Veröffentlichungstag und Bekanntmachung des Hinweises auf die Patenterteilung: **06.12.2023**
(21) Anmeldenummer: 19740506.1
(22) Anmeldetag: 09.07.2019
(51) Int. Cl.: G01J 3/02, G01J 3/26, G01J 3/28

(54) **SPEKTROMETEREINRICHTUNG UND VERFAHREN ZUM HERSTELLEN EINER SPEKTROMETEREINRICHTUNG**
SPECTROMETER DEVICE AND METHOD FOR PRODUCING A SPECTROMETER DEVICE
DISPOSITIF DE SPECTROMÉTRIE ET PROCÉDÉ DE FABRICATION D'UN DISPOSITIF DE SPECTROMÉTRIE

(30) Priorität: 31.07.2018 DE 102018212755
(43) Veröffentlichungstag der Anmeldung: 09.06.2021
(73) Patentinhaber: Robert Bosch GmbH, 70442 Stuttgart (DE)
(72) Erfinder: HUSNIK, Martin, 70176 Stuttgart (DE); HUBER, Christian, 71638 Ludwigsburg (DE); ROEDEL, Reinhold, 72760 Reutlingen (DE); STEIN, Benedikt, 70193 Stuttgart (DE); SCHELLING, Christoph, 70619 Stuttgart (DE)
(86) Internationale Anmeldenummer: PCT/EP2019/068347
(87) Internationale Veröffentlichungsnummer: WO 2020/025263

(56) Entgegenhaltungen:
- US-A1- 2003 173 499
- US-B2- 7 286 244
- ANTILA J: "Miniaturized spectrometer technologies", INFORMATION OPTICS (WIO), 2010 9TH EURO-AMERICAN WORKSHOP ON, IEEE, PISCATAWAY, NJ, USA, 12. Juli 2010 (2010-07-12), Seiten 1-4, XP031760871, ISBN: 978-1-4244-8226-9

## Beschreibung

Die vorliegende Erfindung betrifft eine Spektrometereinrichtung und ein Verfahren zum Herstellen einer Spektrometereinrichtung.

### Stand der Technik

Zur Herstellung möglichst kostengünstiger und kleinskaliger aber dennoch leistungsfähiger Spektrometer besteht meist die Anforderung, mit möglichst wenigen Komponenten und einer möglichst minimalen Anzahl an einfach und kostengünstig ausführbaren Herstellungsschritten auszukommen und eine möglichst geringe Baugröße zu erzielen. Meist werden zur Herstellung von Spektrometereinrichtungen allerdings entweder viele Verfahrensschritte oder Komponenten benötigt, welche auch zu großen Bauvolumina führen können und die anfallenden Kosten für Komponenten und die Herstellung steigern können.

In der US 7,286,244 wird ein Detektoraufbau mit einem Fabry-Perot-Interferometer als Teil eines miniaturisierten Spektrometers angegeben. Eine derartige Ausführung eines Spektrometers ist auch aus den Druckschriften US 2016/245696 und US 2016/245697 bekannt.

### Offenbarung der Erfindung

Die vorliegende Erfindung schafft eine Spektrometereinrichtung nach Anspruch 1 und ein Verfahren zum Herstellen einer Spektrometereinrichtung nach Anspruch 8.

Bevorzugte Weiterbildungen sind Gegenstand der Unteransprüche.

### Vorteile der Erfindung

Die der vorliegenden Erfindung zugrundeliegende Idee besteht darin, eine Spektrometereinrichtung anzugeben, welche sich durch eine geringe Baugröße und eine kostengünstige Herstellungsweise einer Baugruppe (Package) und/oder einer Detektoranordnung mit einem Fabry-Perot-Interferometer auszeichnet. Hierbei wird vorteilhaft eine möglichst kostengünstige aber dennoch leistungsfähige Spektrometereinrichtung mit einer möglichst geringen Baugröße bereitgestellt, wobei die Anzahl der verwendeten Baukomponenten vorteilhaft möglichst gering gehalten wird und bei der Herstellung vorteilhaft lediglich eine möglichst minimale Anzahl an vorteilhaft einfach und kostengünstig auszuführenden Herstellungsschritten angewandt werden kann.

Erfindungsgemäß umfasst die Spektrometereinrichtung eine Fabry-Perot-Interferometer-Einheit, welche ein erstes Trägersubstrat umfasst, wobei das erste Trägersubstrat an einer Unterseite der Fabry-Pérot-Interferometer-Einheit angeordnet ist und eine optische Apertur aufweist; ein erstes Substrat, welches auf einer Oberseite der Fabry-Pérot-Interferometer-Einheit angeordnet ist, welche der Unterseite abgewandt ist und ein zweites Substrat, wobei das erste Trägersubstrat mit der Unterseite auf dem zweiten Substrat angeordnet ist; eine Photodetektoreinrichtung, welche auf oder in dem zweiten Substrat und auf oder in dem ersten Substrat angeordnet ist, wobei ein erster elektrischer Anschlussbereich der Photodetektoreinrichtung und ein zweiter elektrischer Anschlussbereich der Fabry-Pérot-Interferometer-Einheit von einer selben Richtung aus elektrisch kontaktierbar sind.

Gemäß der Erfindung umfasst das erste Substrat ein Kappensubstrat, mit welchem die Fabry-Perot-Interferometer-Einheit abdeckbar ist, und das zweite Substrat umfasst ein Sockelsubstrat, auf welchem die Fabry-Perot-Interferometer-Einheit anbringbar ist, wobei die Photodetektoreinrichtung einen ersten Sensor umfasst, welcher an einer Lichteinfallsrichtung abgewandten Seite des Kappensubstrats angeordnet ist und sich auf einer optischen Achse durch eine Öffnung mit einer optischen Apertur befindet.

Gemäß einer bevorzugten Ausführungsform der Spektrometereinrichtung ist die optische Apertur von einer Öffnung im ersten Trägersubstrat oder einer intransparenten Beschichtung auf dem ersten Trägersubstrat gebildet.

Eine intransparente Beschichtung kann im Bereich der Apertur auch auf dem ersten und/oder zweiten Substrat angeordnet sein.

Gemäß einer bevorzugten Ausführungsform der Spektrometereinrichtung umfasst die Spektrometereinrichtung eine Reflektoreinrichtung, welche der Photodetektoreinrichtung in einer Lichteinfallsrichtung nachgeordnet ist, so dass die Photodetektoreinrichtung zwischen der Reflektoreinrichtung und der Fabry-Perot-Interferometer-Einheit angeordnet ist.

Die Photodetektoreinrichtung umfasst mehrere Detektoren zur Lichtdetektierung, welche an einer Stelle oder räumlich getrennt an mehreren Stellen in der Spektrometereinrichtung angeordnet sein können.

Das Kappensubstrat kann vorteilhaft mittels einer Bondverbindung auf der Fabry-Perot-Interferometer-Einheit angeordnet sein, wobei beispielsweise ein Bondrahmen verwendet werden kann, welcher auf der Fabry-Perot-Interferometer-Einheit angeordnet oder ausgeformt werden kann und auf welchen das Kappensubstrat aufgesetzt werden kann. In analoger Weise kann die Fabry-Perot-Interferometer-Einheit über einen weiteren Bondrahmen auf dem Sockelsubstrat angeordnet sein.

Das Sockelsubstrat und/oder das Kappensubstrat können vorteilhaft auf einer Seite, an welcher die Photodetektoreinrichtung angeordnet werden kann, elektrische Leiterbahnen und Anschlussbereiche, wie beispielsweise Bondpads (Drahtanschlussbereiche), umfassen. Sowohl das Sockel- als auch das Kappensubstrat sind im zu analysierenden Wellenlängenbereich außerhalb eines Bereiches einer Photodetektoreinrichtung transmissiv für das einfallende und zu detektierende Licht. Das Sockelsubstrat und/oder das Kappensubstrat können beispielweise vorteilhaft aus Silizium, Glas oder Saphir bestehen.

Die Photodetektoreinrichtung kann vorteilhaft mittels einer Bondverbindung (z. B. Direktbondverbindung) und/oder einer Klebeverbindung mit der Fabry-Perot-Interferometer-Einheit verbunden oder auf dieser angeordnet werden.

Die Bondverbindung kann vorteilhaft für das Licht transmissiv ausgeformt sein. In diesem Sinne kann vorteilhaft auf Klebeverbindungen zwischen dem Sockelsubstrat und der Fabry-Perot-Interferometer-Einheit und/oder zwischen dem Kappensubstrat und der Fabry-Perot-Interferometer-Einheit verzichtet werden und eine Lichtabschwächung auf die intern in der Spektrometereinrichtung verbaute Photodetektoreinrichtung kann vorteilhaft vermieden werden.

Die Spektrometereinrichtung stellt vorteilhaft einen Messaufbau dar. In der Spektrometereinrichtung werden die Fabry-Perot-Interferometer-Einheit und die Photodetektoreinrichtung vorteilhaft derart miteinander verbunden oder in der Spektrometereinrichtung angeordnet oder ausgeformt, dass der erste Anschlussbereich und der zweite Anschlussbereich vorteilhaft in dieselbe Richtung zeigen, beispielsweise entgegen oder gleich der Lichteinfallsrichtung, mit anderen Worten der Lichteinfallsrichtung zu- oder abgewandt. Durch die gleiche Ausrichtung der beiden Anschlussbereiche können vorteilhaft die Fabry-Perot-Interferometer-Einheit und die Photodetektoreinrichtung im selben elektrischen Kontaktierungsschritt elektrisch angeschlossen, beispielsweise mit jeweils einem Drahtbondanschluss drahtgebondet werden. Dadurch kann vorteilhaft die Zahl der Verfahrensschritte beim elektrischen Anschließen verringert werden, wohingegen in bekannten Bauelementen und deren Herstellungsverfahren zunächst ein Drahtbonden des Detektors, danach ein Montieren der Fabry-Perot-Interferometer-Einheit und anschließend ein Drahtbonden der Fabry-Perot-Interferometer-Einheit erfolgt, und meist dazu noch zusätzliche Komponenten, wie etwa Spacer (Abstandshalter) notwendig sind. Dagegen kann mit dem erfindungsgemäßen Aufbau vorteilhaft eine Kostenverringerung und eine Verringerung der Arbeitsschritte erzielt werden. Durch die vorteilhaft geringe Baugröße der Spektrometereinrichtung kann vorteilhaft eine Länge der Drahtanschlüsse, insbesondere der Anschlussdrähte, besonders kurz sein.

Es ist weiterhin möglich, dass die Spektrometereinrichtung mehrere Fabry-Perot-Interferometer-Einheiten umfasst.

Die erfindungsgemäße Spektrometereinrichtung wird vorteilhaft durch eine geringe Komponentenzahl realisiert. Des Weiteren kann bei deren Herstellung die Zahl der kostenaufwändigen Herstellungsschritte minimiert werden, beispielsweise kann ein notwendiges Ausrichten der Fabry-Perot-Interferometer-Einheit zu einem auf einer Leiterplatte (Printed circuit Board) montierten Detektor vorteilhaft entfallen.

Gemäß einer bevorzugten Ausführungsform der Spektrometereinrichtung ist die Fabry-Perot-Interferometer-Einheit verkapselt und als MEMS-Bauteil ausgeformt.

Die Fabry-Perot-Interferometer-Einheit ist vorteilhaft zumindest von einer Seite verkapselt, wobei die Verkapselung vorteilhaft durch ein Einschließen der Fabry-Perot-Interferometer-Einheit zwischen das Sockelsubstrat und/oder das Kappensubstrat erzielbar ist. Dabei wird vorteilhaft die Fabry-Perot-Interferometer-Einheit durch das Sockel- und das Kappensubstrat von der Umgebung abgeschirmt. Bei dem MEMS-Bauteil handelt es sich vorteilhaft um ein mikromechanisches Bauelement.

Gemäß einer bevorzugten Ausführungsform der Spektrometereinrichtung sind der erste elektrische Anschlussbereich und der zweite elektrische Anschlussbereich der Lichteinfallsrichtung zugewandt oder abgewandt.

Gemäß einer bevorzugten Ausführungsform der Spektrometereinrichtung umfasst diese eine Temperatursensoreinrichtung, welche in dem zweiten Substrat und/oder in dem ersten Substrat und/oder der Fabry-Perot-Interferometereinheit integriert ist und außerhalb der optischen Apertur angeordnet ist.

Die Temperatursensoreinrichtung kann vorteilhaft jegliche Art von in einem Substrat oder Wafer integrierbaren oder darauf montierbaren temperatursensierenden Element umfassen, beispielsweise eine pn-Diode oder einen Thermistor. Vorzugsweise kann die Temperatursensoreinrichtung mit einem ersten Sensor der Photodetektoreinrichtung, welcher in das Kappensubstrat integriert ist, kombiniert ausgeführt sein. Hierbei ist die Temperatursensoreinrichtung in einem Bereich außerhalb der optischen Apertur angeordnet, in welchem auch eine metallische Abdeckung im oder auf dem Kappensubstrat oder Sockelsubstrat angeordnet sein kann, welche eine optische Absorption von Licht im Bereich der Temperatursensoreinrichtung, etwa im Kappensubstrat oder direkt an der Temperatursensoreinrichtung, und somit einer Messmodifizierung einer Temperaturmessung durch das in die Spektrometereinrichtung einfallenden Lichts vorteilhaft verringert oder sogar vermeidet. Die metallische Abdeckung ist vorteilhaft von der Temperatursensoreinrichtung aus entgegen der Lichteinfallsrichtung im oder auf dem Kappensubstrat angeordnet.

Gemäß einer bevorzugten Ausführungsform der Spektrometereinrichtung umfasst die Photodetektoreinrichtung einen ersten Sensor, welcher in das erste Substrat integriert ist.

Die Photodetektoreinrichtung kann vorteilhaft auch diskret ausgeformte Lichtdetektoren oder Sensoren umfassen, welche als eigenständiges Bauelement ausgeformt sind und auf dem Kappensubstrat oder auf dem Sockelsubstrat, innerhalb oder außerhalb der optischen Apertur, angeordnet sein können. Hierbei kann der diskrete Sensor auf dem Sockel- oder Kappensubstrat aufgebondet sein, wodurch auf eine lichtabsorbierende oder lichtabdeckende Klebeverbindung vorteilhaft verzichtet werden kann. Dadurch kann vorteilhaft die Ausbeute des zu analysierenden oder zu detektierenden und auf den Sensor einfallenden Lichts vergrößert werden, da Kleber, beispielsweise organische Kleber, eigene Absorptionsbanden besitzen können und das einfallende zu analysierende Lichtspektrum beeinflussen können. Im Bereich der optischen Apertur kann der erste Sensor angeordnet sein und auch ein weiterer diskreter Detektor der Photodetektoreinrichtung angeordnet sein, also beispielsweise beide auf der optischen Achse der Fabry-Perot-Interferometer-Einheit oder, bei einer Draufsicht auf die Apertur im ersten Trägersubstrat, innerhalb dieser Apertur. Es ist jedoch auch möglich, dass zumindest der erste Sensor oder der diskrete Detektor außerhalb der optischen Apertur angeordnet ist. Der erste Sensor kann sich vorteilhaft auch über die Apertur hinaus, in Draufsicht auf diese gesehen, erstrecken. Der erste Sensor kann in einem Randbereich des Kappenoder Sockelsubstrats den ersten elektrischen Anschlussbereich aufweisen, an welchem dieser beispielsweise drahtangeschlossen werden kann.

Gemäß einer bevorzugten Ausführungsform der Spektrometereinrichtung umfasst die Photodetektoreinrichtung einen zweiten Sensor, welcher am oder im ersten Substrat und/oder zweiten Substrat außerhalb der optischen Apertur angeordnet ist, wobei das erste Substrat und/oder zweite Substrat in einem Bereich des zweiten Sensors eine metallische Abdeckung umfasst, welche den zweiten Sensor entgegen der Lichteinfallsrichtung abdeckt.

Der zweite Sensor ist vorteilhaft auf dem Kappen- und/oder Sockelsubstrat angeordnet oder in dieses integriert. Hierbei stellen die metallische Abdeckung und der zweite Sensor, welcher vorteilhaft ein lichtsensierendes Element, wie etwa eine Diode, umfasst, vorteilhaft einen Referenzdetektor für eine Dunkelstrommessung dar. Mit anderen Worten, kann dadurch vorteilhaft der Dunkelstrom am Ort der Spektrometereinrichtung ermittelt und berücksichtigt werden, welcher ohne das einfallende Licht zum Messzeitpunkt vorherrscht. Vorzugsweise kann der zweite Sensor mit einem ersten Sensor der Photodetektoreinrichtung, welcher in das Kappensubstrat oder Sockelsubstrat integriert sein kann, kombiniert ausgeführt sein. Der zweite Sensor kann als diskretes, eigenständiges, Sensorbauelement an oder auf dem Kappensubstrat oder Sockelsubstrat angeordnet sein oder in dieses integriert sein.

Gemäß einer bevorzugten Ausführungsform der Spektrometereinrichtung umfasst die Reflektoreinrichtung eine paraboloidische Form mit einem ersten Fokalpunkt und die Photodetektoreinrichtung ist zumindest in dem ersten Fokalpunkt angeordnet, wobei der erste Fokalpunkt auf einer optischen Achse der Fabry-Perot-Interferometer-Einheit liegt.

Die Reflektoreinrichtung kann vorteilhaft einen oder mehrere Spiegelelemente oder eine Linse umfassen. Die optische Achse der Fabry-Perot-Interferometer-Einheit verläuft vorteilhaft durch die Apertur im ersten Trägersubstrat senkrecht zu einer flächigen Ausdehnungsrichtung des ersten Trägersubstrats und parallel zur Lichteinfallsrichtung oder dieser entgegen. Die Reflektoreinrichtung überdeckt vorteilhaft den Halbraum über der Fabry-Perot-Interferometer-Einheit, welcher der Fabry-Perot-Interferometer-Einheit in Lichteinfallsrichtung nachfolgt und reflektiert das einfallende Licht, nachdem dieses durch die Fabry-Perot-Interferometer-Einheit und das Kappen- sowie durch das Sockelsubstrat (auch andere Reihenfolge möglich) durchlaufen ist, vorteilhaft auf das zuletzt vom Licht durchlaufene Substrat (Kappen- oder Sockelsubstrat), insbesondere auf die darauf oder darin angeordnete Photodetektoreinrichtung, zumindest teilweise zurück und fokussiert vorteilhaft das Licht im ersten Fokalpunkt. Dadurch wird vorteilhaft die Signalintensität des zu detektierenden Lichts erhöht, da jenes Licht, welches nicht beim ersten Durchgang durch die Photodetektoreinrichtung, welche sich auf der optischen Achse in der optischen Apertur befindet, vollständig absorbiert wurde oder daran vorbeifiel vorteilhaft mittels der Reflektoreinrichtung, welche als reflexives optisches Element ausgeformt sein kann, auf die Photodetektoreinrichtung vorteilhaft zurückgeworfen werden kann.

Zur Referenzierung der Messung des Lichts kann die Photodetektoreinrichtung vorteilhaft zusätzliche Komponenten umfassen, etwa Lichtdetektoren, welche vorteilhaft außerhalb der optischen Apertur und damit vorteilhaft außerhalb des ersten Fokalpunkts angeordnet sind und durch eine metallische Abdeckung gegen das einfallende Licht abgedeckt sein können. Die metallische Abdeckung kann beispielsweise jegliche Art von im Wesentlichen flächiger Metallisierung auf oder in den Substraten oder eine metallische Schicht umfassen.

Die Abbildung des einfallenden Lichts über einen Hohlspiegel, vorteilhaft in dessen Fokalpunkt, garantiert vorteilhaft eine Einschränkung des Akzeptanzwinkels der Fabry-Perot-Interferometer-Einheit entsprechend der Detektorfläche und der fokalen Länge (Brennweite) des Spiegels. Durch eine Fokussierung des Lichts in den Fokalpunkt kann vorteilhaft ein kleiner Lichtdetektor der Photodetektoreinrichtung verwendet werden, was vorteilhaft weitere Kosten spart.

Gemäß einer bevorzugten Ausführungsform der Spektrometereinrichtung umfasst die Reflektoreinrichtung eine zumindest teilweise ellipsoidische Form mit einem ersten Fokalpunkt und einem zweiten Fokalpunkt und die Photodetektoreinrichtung ist in dem zweiten Fokalpunkt angeordnet, wobei der zweite Fokalpunkt außerhalb einer optischen Achse der Fabry-Perot-Interferometer-Einheit liegt.

Die Photodetektoreinrichtung kann vorteilhaft einen Sensorbereich innerhalb der optischen Apertur im ersten Fokalpunkt und einen weiteren Sensorbereich außerhalb der optischen Apertur in einem zweiten Fokalpunkt umfassen. Diese Sensorbereiche können Lichtdetektoren umfassen, welche jeweils auf oder in dem Substrat (Sockel- und/oder Kappensubstrat) angeordnet sind. Die Reflektoreinrichtung weist vorteilhaft eine ellipsoidische Form auf, welche zwei Fokalpunkte umfasst, wobei das Licht in den ersten Fokalpunkt gesammelt werden kann und konzentriert auf den zweiten Fokalpunkt fokussiert werden kann. Die Photodetektoreinrichtung in dem zweiten Fokalpunkt kann vorteilhaft auf dem Sockel- oder Kappensubstrat aufgeklebt sein, da das Licht an der Stelle des zweiten Fokalpunktes vorteilhaft durch Spiegel von der der Lichteinfallsrichtung entgegengesetzten Richtung auf die Photodetektoreinrichtung umgelenkt wird und nicht das Substrat und ggf. den Kleber durchleuchten muss.

Gemäß einer bevorzugten Ausführungsform der Spektrometereinrichtung umfasst diese ein zweites Trägersubstrat, auf welchem das zweite Substrat angeordnet ist und zumindest teilweise mittels einer Klebeverbindung fixiert ist. Das zweite Trägersubstrat kann beispielsweise eine Leiterplatte umfassen.

Das zweite Trägersubstrat umfasst vorteilhaft ein elektronisches Trägersubstrat, etwa eine Leiterplatine, auf welcher die vorteilhaft miniaturisierte Spektrometereinrichtung angeordnet und fixiert sein kann.

Gemäß einer bevorzugten Ausführungsform der Spektrometereinrichtung umfasst das zweite Substrat an einer Unterseite einen ersten Bereich und ist an diesem mit einer Klebeverbindung am zweiten Trägersubstrat montierbar.

Gemäß einer bevorzugten Ausführungsform der Spektrometereinrichtung umfasst das zweite Substrat an einer Unterseite einen zweiten Bereich und ist mit diesem über einen Montageanschlag auf dem zweiten Trägersubstrat montierbar.

Die Klebeverbindung ist vorteilhaft auf den ersten Bereich begrenzt, so dass der Montageanschlag frei von einer Klebeverbindung sein kann. Der Montageanschlag kann einen Sockel umfassen, beispielsweise als Abstandshalter und/oder Fußpunkt für das Sockelsubstrat auf dem zweiten Trägersubstrat. Im zweiten Bereich kann vorteilhaft auch eine Blende angeordnet sein, welche für das einfallende Licht vorteilhaft nicht durchlässig ist. Die Blende kann sich über die gesamte oder nur teilweise über die dem zweiten Trägersubstrat zugewandten Unterseite des Sockelsubstrats erstrecken, vorteilhaft auf dieser angeordnet oder aufgebracht sein und eine Öffnung zum Lichtdurchlass umfassen, welche in lateraler Ausdehnung der optischen Apertur im ersten Trägersubstrat entsprechen kann. Auch der erste Bereich kann die Blende umfassen, welche dort mit der Klebeverbindung mit dem zweiten Trägersubstrat verbunden sein kann. Der erste Bereich befindet sich vorteilhaft in demjenigen Bereich des Sockelsubstrats, an welchem der zweite elektrische Anschlussbereich, etwa deren Drahtbondpads, der Fabry-Perot-Interferometer-Einheit vorgesehen sein kann, wodurch eine verbesserte Qualität einer Drahtbondkontaktierung erzielt werden kann.

Gemäß einer bevorzugten Ausführungsform der Spektrometereinrichtung umfasst die Reflektoreinrichtung einen Hohlspiegel.

Durch die Verwendung eines Spiegels kann vorteilhaft eine Baugröße der Spektrometereinrichtung gegenüber einer Ausführung mit einer Linse verringert werden.

Gemäß einer bevorzugten Ausführungsform der Spektrometereinrichtung ist die Photodetektoreinrichtung mit einer Bondverbindung auf dem zweiten Substrat oder auf dem ersten Substrat angeordnet.

Alternativ dazu ist es auch möglich, dass die Photodetektoreinrichtung mit einer Klebeverbindung auf dem Sockelsubstrat oder auf dem Kappensubstrat angeordnet wird.

Erfindungsgemäß umfasst ein Verfahren zum Herstellen einer Spektrometereinrichtung die Schritte:

Bereitstellen eines ersten Substrats und eines zweiten Substrats und einer Fabry-Perot-Interferometer-Einheit mit einem ersten Trägersubstrat, wobei das erste Trägersubstrat an einer Unterseite der Fabry-Perot-Interferometer-Einheit angeordnet wird und eine optische Apertur aufweist; Anordnen der Fabry-Perot-Interferometer-Einheit mit dem ersten Trägersubstrat auf dem zweiten Substrat, wobei das erste Trägersubstrat mit der Unterseite auf dem zweiten Substrat angeordnet wird und Anordnen des ersten Substrats auf der Fabry-Perot-Interferometer-Einheit, wobei das erste Substrat auf einer Oberseite der Fabry-Perot-Interferometer-Einheit angeordnet wird, welche der Unterseite abgewandt ist, und wobei auf oder in dem zweiten Substrat und auf oder in dem ersten Substrat eine Photodetektoreinrichtung angeordnet wird oder in diese integriert ist, wobei das erste Substrat ein Kappensubstrat umfasst, mit welchem die Fabry-Perot-Interferometer-Einheit abgedeckt wird, und das zweite Substrat ein Sockelsubstrat umfasst, auf welchem die Fabry-Perot-Interferometer-Einheit angebracht wird, wobei die Photodetektoreinrichtung einen ersten Sensor umfasst, welcher an einer Lichteinfallsrichtung abgewandten Seite des Kappensubstrats angeordnet ist und sich auf einer optischen Achse durch eine Öffnung mit einer optischen Apertur befindet; und elektrisches Kontaktieren eines ersten elektrischen Anschlussbereichs der Photodetektoreinrichtung und eines zweiten elektrischen Anschlussbereichs der Fabry-Perot-Interferometer-Einheit mit Drahtanschlüssen, wobei das Kontaktieren von einer gleichen Seite aus erfolgt.

Gemäß einer bevorzugten Ausführung des Verfahrens erfolgt nach dem Verfahrensschritt S3 in einem Verfahrensschritt S4 ein Anordnen des zweiten Substrats auf einem zweiten Trägersubstrat und zumindest ein teilweises Verkleben des Sockelsubstrats mit dem zweiten Trägersubstrat.

In einem weiteren Verfahrensschritt S5 erfolgt ein Anordnen einer Reflektoreinrichtung über dem zweiten Substrat oder über dem ersten Substrat derart, dass die Reflektoreinrichtung der Photodetektoreinrichtung in einer Lichteinfallsrichtung nachgeordnet wird, so dass die Photodetektoreinrichtung zwischen der Reflektoreinrichtung und der Fabry-Perot-Interferometer-Einheit angeordnet ist.

Das Verfahren zeichnet sich vorteilhaft auch durch die in Verbindung mit der Spektrometereinrichtung beschriebenen Merkmale und deren Vorteile aus und umgekehrt.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen Die vorliegende Erfindung wird nachfolgend anhand der in den schematischen

Figuren der Zeichnung angegebenen Ausführungsbeispiele näher erläutert. Es zeigen:
- Fig. 1: einen schematischen Querschnitt durch eine Spektrometereinrichtung gemäß eines Ausführungsbeispiels der vorliegenden Erfindung;
- Fig. 2: eine schematische Draufsicht auf eine Spektrometereinrichtung aus der Fig. 1;
- Fig. 3: einen schematischen Querschnitt durch eine Spektrometereinrichtung gemäß eines weiteren Ausführungsbeispiels der vorliegenden Erfindung;
- Fig. 4: einen schematischen Querschnitt durch eine Spektrometereinrichtung gemäß eines Beispiels; und
- Fig. 5: eine schematische Abfolge der Schritte des Verfahrens gemäß eines Ausführungsbeispiels der vorliegenden Erfindung.

In den Figuren bezeichnen gleiche Bezugszeichen gleiche bzw. funktionsgleiche Elemente.

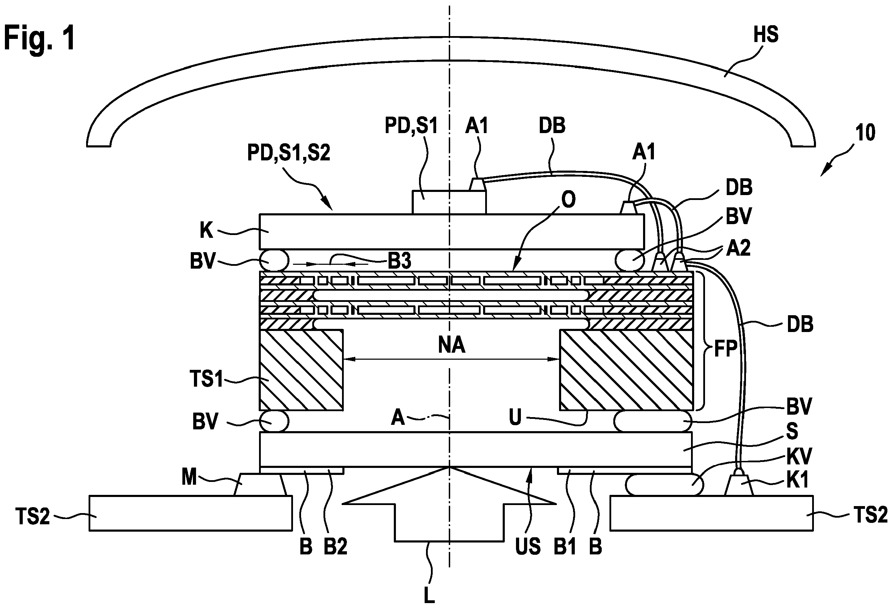

Fig. 1 zeigt einen schematischen Querschnitt durch eine Spektrometereinrichtung gemäß eines Ausführungsbeispiels der vorliegenden Erfindung.

Die Spektrometereinrichtung 10 umfasst ein erstes Substrat K, vorteilhaft ein Kappensubstrat K und ein zweites Substrat S, vorteilhaft ein Sockelsubstrat S; eine Fabry-Perot-Interferometer-Einheit FP, welche ein erstes Trägersubstrat TS1 umfasst, wobei das erste Trägersubstrat TS1 eine Unterseite U und vorteilhaft eine Öffnung mit einer optischen Apertur NA aufweist und wobei das erste Trägersubstrat TS1 mit der Unterseite U auf dem Sockelsubstrat S angeordnet sein kann, wobei das Kappensubstrat K auf einer Oberseite O der Fabry-Perot-Interferometer-Einheit FP angeordnet sein kann. Des Weiteren umfasst die Spektrometereinrichtung 10 eine Photodetektoreinrichtung PD, welche auf oder in dem Kappensubstrat K angeordnet ist, und mehrere Komponenten als Lichtdetektoren umfassen kann, wobei ein erster elektrischer Anschlussbereich A1 der Photodetektoreinrichtung PD und ein zweiter elektrischer Anschlussbereich A2 der Fabry-Perot-Interferometer-Einheit FP von einer selben Richtung elektrisch kontaktierbar sind. Des Weiteren umfasst die Spektrometereinrichtung 10 vorteilhaft eine Reflektoreinrichtung HS, welche der Photodetektoreinrichtung PD in einer Lichteinfallsrichtung L nachgeordnet ist, so dass die Photodetektoreinrichtung PD zwischen der Reflektoreinrichtung HS und der Fabry-Perot-Interferometer-Einheit FP angeordnet ist. Vorteilhafterweise kann durch das Kappensubstrat K und das Sockelsubstrat S ein definierter Druck im Hohlraum zwischen den beiden Substraten eingestellt werden.

Die Photodetektoreinrichtung PD umfasst inen ersten Sensor S1, welcher in das Kappensubstrat integriert sein kann, an einer der Lichteinfallsrichtung L abgewandten Seiten des Kappensubstrats K. Des Weiteren kann die Photodetektoreinrichtung PD einen zweiten Sensor S2 umfassen, welcher innerhalb und/oder außerhalb der Öffnung NA angeordnet sein kann und durch eine metallische Abdeckung (nicht gezeigt) entgegen der Lichteinfallsrichtung L zur Dunkelstrommessung vom einfallenden Licht abgeschirmt sein kann. Der zweite Sensor kann alternativ dazu aber auch außerhalb einer metallischen Abdeckung angeordnet sein und den direkten Lichteinfall oder dessen Reflexion an der Reflektoreinrichtung messen. Der erste Sensor S1 kann vorteilhaft auch als diskreter Lichtdetektor ausgeformt sein und sich auf der optischen Achse A durch die Öffnung NA mit der optischen Apertur befinden. Der Sensor S1 kann wahlweise (alternativ zur Darstellung) auch kopfüber (flipchip) mit einer auf dem Kappensubstrat aufgebrachten Metallisierung verbunden sein, die über Leiterbahnen zu einem ersten Anschlussbereich A1 führt. Auch als in das Kappensubstrat K integrierter Sensor kann der erste Sensor S1 sich auf der optischen Achse A oder um diese herum befinden. Das Kappensubstrat K ist vorteilhaft über eine Bondverbindung BV, welche einen Bondrahmen umfassen kann, auf der Fabry-Perot-Interferometer-Einheit FP auf deren Oberseite O angeordnet. Die Spiegelelemente der Fabry-Perot-Interferometer-Einheit FP können zum ersten Trägersubstrat TS1 hin eine Unterätzung in einem Bereich B3 aufweisen, welche sich über die Öffnung NA lateral hinaus erstrecken kann, wodurch eine mechanische Entkopplung der Verspannung eines Innenbereichs der Spiegelelemente der Fabry-Perot-Interferometer-Einheit FP über der Öffnung NA und dem ersten Trägersubstrat TS1 erzielbar sein kann, wodurch vorteilhaft eine verbesserte Planparallelität der Spiegelelemente im Innenbereich erzielbar sein kann. Die Fabry-Perot-Interferometer-Einheit FP kann weiterhin über eine weitere Bondverbindung, vorteilhaft einen weiteren Bondrahmen, mit deren Unterseite U auf dem Sockelsubstrat S angeordnet sein, wobei das Sockelsubstrat auf dessen der Fabry-Perot-Interferometer-Einheit FP abgewandten Unterseite US eine Blende B umfassen kann. Die Blende B kann eine Öffnung umfassen, welche der Öffnung NA im ersten Trägersubstrat TS1 entsprechen kann und die Fabry-Perot-Interferometer-Einheit FP bis auf die optische Apertur NA gegen das einfallende Licht abdecken kann. Im ersten Bereich B1 auf der Unterseite US des Sockelsubstrats S, welcher mit der Blende B in diesem Bereich übereinstimmen kann, kann vorteilhaft eine Klebeverbindung KV mit einem zweiten Trägersubstrat TS2 hergestellt werden, und das Sockelsubstrat S auf dem zweiten Trägersubstrat TS2 fixiert werden. Das zweite Trägersubstrat TS2 kann vorteilhaft eine Leiterplatine umfassen und weist vorteilhaft eine Öffnung auf, welche zum Durchlassen des einfallenden Lichts in die Öffnung NA geeignet ist, beispielsweise lateral größer ausgeformt sein kann als die Öffnung NA. In einem zweiten Bereich B2 auf der Unterseite US des Sockelsubstrats S kann das Sockelsubstrat S über einen Montageanschlag M auf dem zweiten Trägersubstrat TS2 angeordnet oder montiert sein.

Bei der Anordnung der Photodetektoreinrichtung PD auf oder in dem Kappensubstrat K kann vorteilhaft auf ein Kleben verzichtet werden, wodurch sich vorteilhaft keine Abschwächung oder Modifizierung des einfallenden Lichts auf dem Weg zur Photodetektoreinrichtung PD in der Spektrometereinrichtung 10 ergibt. Beispielsweise kann die Photodetektoreinrichtung PD auf dem Kappensubstrat K direkt aufgebondet werden.

Der erste elektrische Anschlussbereich A1 der Photodetektoreinrichtung PD ist vorteilhaft an jedem Element der Photodetektoreinrichtung PD, etwa am ersten Sensor S1 und am zweiten Sensor S2 und auch an möglichen weiteren Detektoren, vorhanden. Von diesen Anschlussbereichen A1 kann eine Drahtverbindung DB zu weiteren ersten Anschlussbereichen A1 oder zweiten Anschlussbereichen A2 der Fabry-Perot-Interferometer-Einheit FP oder Kontaktpunkten K1 auf dem zweiten Trägersubstrat TS2 geführt sein. Vorteilhaft sind alle Kontaktpunkte K1 sowie ersten Anschlussbereiche A1 und zweiten Anschlussbereiche A2 bezüglich der Lichteinfallsrichtung L in die gleiche Richtung ausgerichtet, etwa auch an einer gleichen lateralen Seite des Kappensubstrats K und/oder des Sockelsubstrats S und/oder der Fabry-Perot-Interferometer-Einheit FP angeordnet, und können in einem gleichen Verfahrensschritt und von der gleichen Seite aus vorteilhaft mit einem Drahtbondverfahren elektrisch kontaktiert werden, was Kosten bei der Verbindung, Verbindungsmittel und Verfahrensschritte sparen kann.

Die Reflektoreinrichtung HS umfasst vorteilhaft einen oder mehrere paraboloidische Hohlspiegel, wobei auch andere reflektierenden Elemente denkbar sind, welche das Licht, welches bei einem ersten Durchgang nicht von der Photodetektoreinrichtung PD vollständig aufgenommen wurde, erneut auf diese zurückwerfen können. Die Reflektoreinrichtung HS überdeckt vorteilhaft den Halbraum über dem Kappensubstrat K und kann auf der optischen Achse liegen, wobei der Fokalpunkt der Reflektoreinrichtung HS auf der optischen Achse A liegen kann.

Die Reflektoreinrichtung HS kann auch eine optimierte Freiform umfassen.

Die Spektrometereinrichtung 10 zeichnet sich vorteilhaft durch eine möglichst geringe Anzahl von Komponenten aus und kann mit möglichst wenig kostenintensiven Verfahrensschritten hergestellt werden und vorteilhaft in Mikrospektrometern eingesetzt werden.

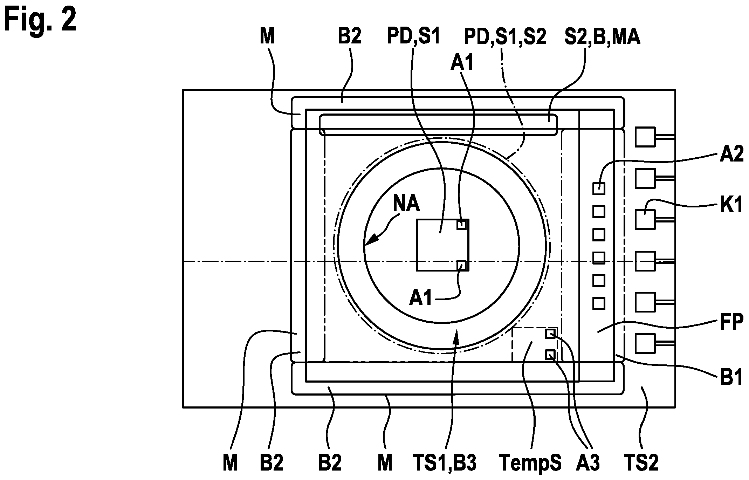

Fig. 2 zeigt eine schematische Draufsicht auf eine Spektrometereinrichtung aus der Fig. 1.

Auf dem zweiten Trägersubstrat TS2 kann vorteilhaft die Anordnung aus Sockelsubstrat, Fabry-Perot-Interferometer-Einheit und Kappensubstrat angeordnet sein, wobei sich das zweite Trägersubstrat TS lateral über das Kappen- und Sockelsubstrat und die Fabry-Perot-Interferometer-Einheit in alle Richtungen hinaus erstrecken kann. Die Öffnung mit der optischen Apertur NA ist vorteilhaft kreisförmig im ersten Trägersubstrat TS1 ausgeformt, wobei sich der Bereich B3 der Unterätzung zwischen den Spiegelelementen und dem ersten Trägersubstrat TS1 der Fabry-Perot-Interferometer-Einheit lateral über die Öffnung NA kreisförmig hinaus erstrecken kann. Die Kontaktpunkte K1 können in einer Mehrzahl auf dem zweiten Trägersubstrat TS2 ausgeformt sein. Die Fabry-Perot-Interferometer-Einheit FP kann sich über dem ersten Bereich B1 über lateral über das Kappensubstrat K hinaus erstrecken, so dass die Kontaktstellen des zweiten elektrischen Anschlussbereichs A2 in Draufsicht freiliegen. In einem Bereich außerhalb der Öffnung NA ist vorteilhaft im Kappensubstrat K oder der Fabry-Perot-Interferometer-Einheit eine Temperatursensoreinrichtung TempS angeordnet, welche selbst einen dritten Anschlussbereich A3 zur Kontaktierung, etwa mit Drahtbonds, umfassen kann. Der zweite Bereich B2 mit dem Montageanschlag M kann vorteilhaft an allen Randbereichen des Sockelsubstrats ausgeformt sein, außer im ersten Bereich B1, welcher sich über eine ganze Seite des Sockelsubstrats erstrecken kann. Der zweite Sensor S2 kann mit der metallischen Abdeckung MA (B) in einem Randbereich des Kappensubstrats oder des Sockelsubstrats (etwa auch drunter am Montageanschlag) ausgeformt sein. Die Kontaktstellen des ersten Anschlussbereichs A1, des zweiten Anschlussbereichs A2 und des dritten Anschlussbereichs A3 können vorteilhaft zu einem gleichen lateralen Rand der Spektrometereinrichtung hin ausgeformt sein, vorzugsweise für eine möglichst kurze Drahtbondverbindung zu den Kontaktpunkten K1 auf dem zweiten Trägersubstrat TS2 hin.

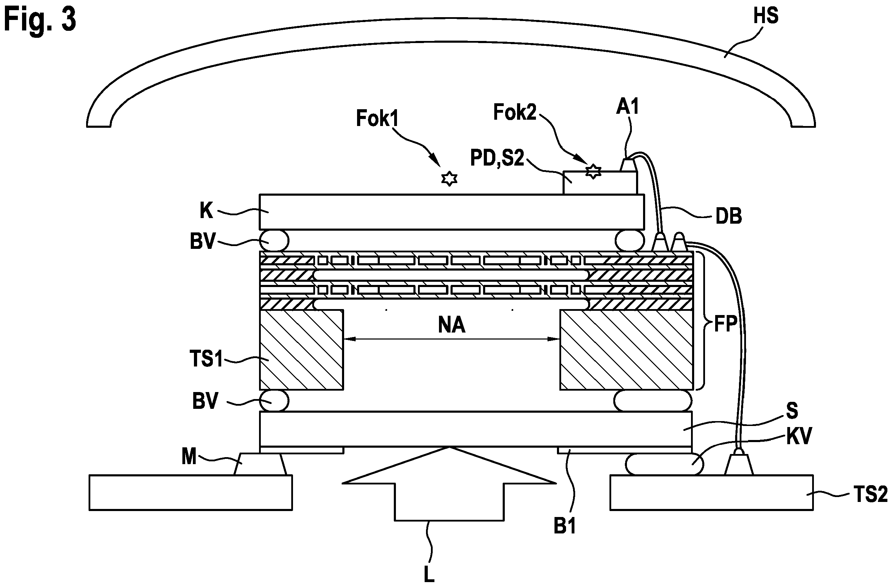

Fig. 3 zeigt einen schematischen Querschnitt durch eine Spektrometereinrichtung gemäß eines weiteren Ausführungsbeispiels der vorliegenden Erfindung.

Die Ausführung der Spektrometereinrichtung aus der Fig. 3 entspricht im Wesentlichen jener aus der Fig. 1, mit dem Unterschied, dass die Reflektoreinrichtung HS einen ellipsoidischen Hohlspiegel mit einem ersten Fokalpunkt Fok1 und einem zweiten Fokalpunkt Fok2 umfasst und die Photodetektoreinrichtung PD zumindest im zweiten Fokalpunkt Fok2 angeordnet sein kann, wobei der erste Fokalpunkt Fok1 vorteilhaft auf der optischen Achse A liegt und der zweite Fokalpunkt Fok2 vorteilhaft außerhalb der optischen Achse A liegt. In diesem Fall kann die Photodetektoreinrichtung PD im Bereich des zweiten Fokalpunktes Fok2 mit einer Klebeverbindung auf dem Kappensubstrat K angeordnet werden, da das einfallende Licht im ersten Fokalpunkt gesammelt und dann vom Hohlspiegel zurückgeworfen auf die Photodetektoreinrichtung im zweiten Fokalpunkt Fok2 fokussiert wird. Die Photodetektoreinrichtung PD kann hierbei im zweiten Fokalpunkt einen diskreten Detektor, etwa auch den zweiten Sensor S2 umfassen, welcher als einfacher Detektor zum Messen des einfallenden Lichts ausgeformt sein kann.

Die Photodetektoreinrichtung PD in dem zweiten Fokalpunkt Fok2 kann zumindest teilweise über dem ersten Bereich B1 und/oder über dem zweiten Bereich B2 angeordnet sein.

Alternativ kann der Hohlspiegel HS auch derart verkippt sein, dass sein zweiter Fokalpunkt Fok2 mit der Position der Photodetektoreinrichtung PD, die außerhalb der optischen Achse A, liegt zusammenfällt. Der Hohlspiegel kann auch eine optimierte Freiform umfassen.

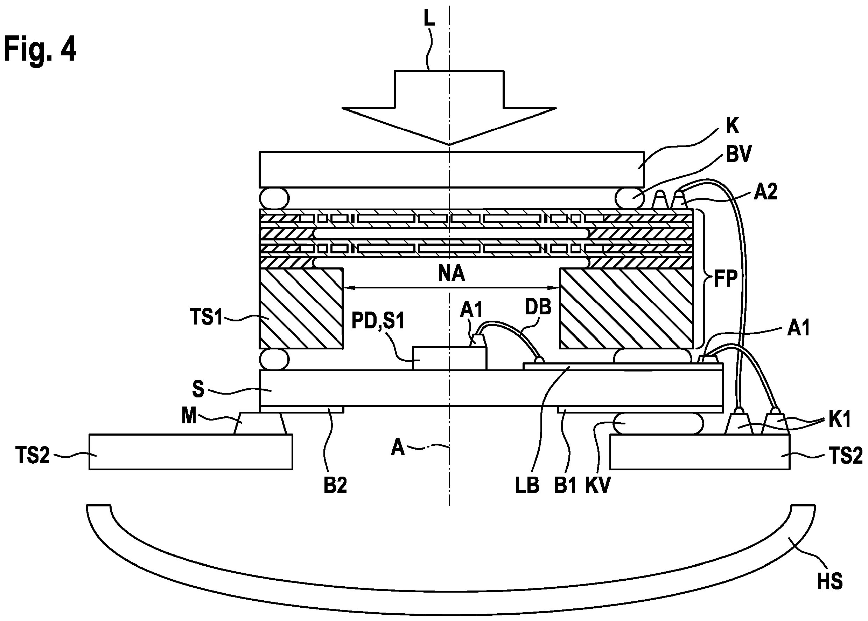

Fig. 4 zeigt einen schematischen Querschnitt durch eine Spektrometereinrichtung gemäß eines Beispiels.

Die Ausführung der Spektrometereinrichtung aus der Fig. 4 entspricht im Wesentlichen jener aus der Fig. 1, mit dem Unterschied, dass die Lichteinfallsrichtung L nun vorteilhaft derart verläuft, dass das einfallende Licht zuerst durch das Kappensubstrat K in die Spektrometereinrichtung 10 eintritt, und dass die Reflektoreinrichtung HS dem Sockelsubstrat S und dem zweiten Trägersubstrat TS2, vorteilhaft in dieser Reihenfolge, nachgeordnet ist. Hierbei sind der erste Anschlussbereich A1, der zweite Anschlussbereich A2 und die Kontaktstellen K1 auf dem zweiten Trägersubstrat TS2 der Lichteinfallsrichtung L vorteilhaft zugewandt, wobei sie im Ausführungsbeispiel der Fig. 1 der Lichteinfallsrichtung abgewandt sein können. Die Photodetektoreinrichtung PD ist mit zumindest einem Bauelement, etwa dem ersten Sensor S1, welcher als diskretes Bauteil ausgeformt sein kann, auf dem Sockelsubstrat S angeordnet oder in dieses integriert, vorteilhaft an der optischen Achse. Hierfür kann das Sockelsubstrat eine Leiterbahn auf einer der Fabry-Perot-Interferometer-Einheit FP zugewandten Oberfläche zur Drahtkontaktierung mit dem ersten Anschlussbereich A1 der Photodetektoreinrichtung PD umfassen. Die Photodetektoreinrichtung PD kann auf dem Sockelsubstrat S ausgeformt, aufgebondet oder aufgeklebt werden, beispielsweise auch per Flip-Chip-Verfahren auf Leiterbahnen des Sockelsubstrats S. Durch die elektrische Leiterbahn LB kann der erste Anschlussbereich A1 an den Rand des Sockelsubstrats S versetzt werden.

In allen Ausführungsbeispielen kann anstatt der Öffnung auch nur eine optische Apertur vorhanden sein.

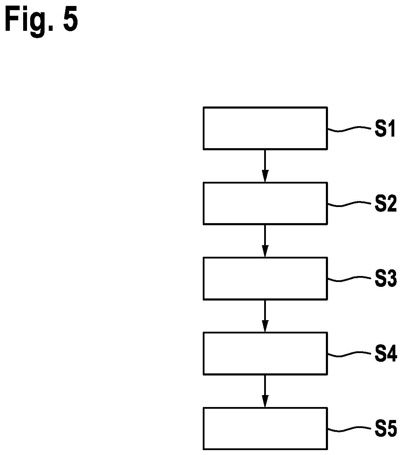

Fig. 5 zeigt eine schematische Abfolge der Schritte des Verfahrens gemäß eines Ausführungsbeispiels der vorliegenden Erfindung.

Bei dem Verfahren zum Herstellen einer Spektrometereinrichtung erfolgt ein Bereitstellen S1 eines ersten Substrats und/oder eines zweiten Substrats und einer Fabry-Perot-Interferometer-Einheit mit einem ersten Trägersubstrat, wobei das erste Trägersubstrat an einer Unterseite der Fabry-Perot-Interferometer-Einheit angeordnet wird und eine optische Apertur aufweist; ein Anordnen S2 der Fabry-Perot-Interferometer-Einheit mit dem ersten Trägersubstrat auf dem zweiten Substrat, wobei das erste Trägersubstrat mit der Unterseite auf dem zweiten Substrat angeordnet wird und/oder ein Anordnen des ersten Substrats auf der Fabry-Perot-Interferometer-Einheit, , wobei das erste Substrat auf einer Oberseite der Fabry-Perot-Interferometer-Einheit angeordnet wird, welche der Unterseite abgewandt ist, und wobei auf oder in dem zweiten Substrat und/oder auf oder in dem ersten Substrat eine Photodetektoreinrichtung angeordnet wird oder in diese integriert ist; und ein elektrisches Kontaktieren S3 eines ersten elektrischen Anschlussbereichs der Photodetektoreinrichtung und eines zweiten elektrischen Anschlussbereichs der Fabry-Perot-Interferometer-Einheit mit Drahtanschlüssen, wobei das Kontaktieren von einer gleichen Seite aus erfolgt.

Nach dem Verfahrensschritt S3 kann in einem weiteren Verfahrensschritt S4 ein Anordnen des Sockelsubstrats bzw. der Fabry-Perot-Inferferometer-Einheit auf einem zweiten Trägersubstrat und zumindest ein teilweises Verkleben des Sockelsubstrats bzw. der Fabry-Perot-Inferferometer-Einheit mit dem zweiten Trägersubstrat erfolgen. In einem weiteren, vorteilhaft nachfolgenden, Verfahrensschritt S5 erfolgt ein Anordnen einer Reflektoreinrichtung über dem Sockelsubstrat oder über dem Kappensubstrat derart, dass die Reflektoreinrichtung der Photodetektoreinrichtung in einer Lichteinfallsrichtung nachgeordnet wird, so dass die Photodetektoreinrichtung zwischen der Reflektoreinrichtung und der Fabry-Perot-Interferometer-Einheit angeordnet ist.

Obwohl die vorliegende Erfindung anhand der bevorzugten Ausführungsbeispiele vorstehend vollständig beschrieben wurde, ist sie darauf nicht beschränkt, sondern auf vielfältige Art und Weise modifizierbar.

## Patentansprüche

1. Spektrometereinrichtung (10) umfassend,
- eine Fabry-Perot-Interferometer-Einheit (FP), welche ein erstes Trägersubstrat (TS1) umfasst, wobei das erste Trägersubstrat (TS1) an einer Unterseite (U) der Fabry-Pérot-Interferometer-Einheit (FP) angeordnet ist und eine optische Apertur (NA) aufweist;
- ein erstes Substrat (K), welches auf einer Oberseite (O) der Fabry-Pérot-Interferometer-Einheit (FP) angeordnet ist, welche der Unterseite (U) abgewandt ist und ein zweites Substrat (S), wobei das erste Trägersubstrat (TS1) mit der Unterseite (U) auf dem zweiten Substrat (S) angeordnet ist;
- eine Photodetektoreinrichtung (PD), welche auf oder in dem zweiten Substrat (S) und auf oder in dem ersten Substrat (K) angeordnet ist, wobei ein erster elektrischer Anschlussbereich (A1) der Photodetektoreinrichtung (PD) und ein zweiter elektrischer Anschlussbereich (A2) der Fabry-Pérot-Interferometer-Einheit (FP) von einer selben Richtung aus elektrisch kontaktierbar sind, wobei das erste Substrat (K) ein Kappensubstrat umfasst, mit welchem die Fabry-Perot-Interferometer-Einheit (FP) abdeckbar ist, und das zweite Substrat (S) ein Sockelsubstrat umfasst, auf welchem die Fabry-Perot-Interferometer-Einheit (FP) anbringbar ist, wobei die Photodetektoreinrichtung (PD) einen ersten Sensor (S1) umfasst, welcher an einer Lichteinfallsrichtung (L) abgewandten Seite des Kappensubstrats (K) angeordnet ist und sich auf einer optischen Achse (A) durch eine Öffnung (NA) mit einer optischen Apertur befindet.

2. Spektrometereinrichtung (10) nach Anspruch 1, wobei die optische Apertur von einer Öffnung im ersten Trägersubstrat (TS1) oder einer intransparenten Beschichtung auf dem ersten Trägersubstrat (TS1) gebildet wird.

3. Spektrometereinrichtung (10) nach einem der Ansprüche 1 bis 2, bei der der erste elektrische Anschlussbereich (A1) und der zweite elektrische Anschlussbereich (A2) der Lichteinfallsrichtung (L) zugewandt oder abgewandt sind.

4. Spektrometereinrichtung (10) nach einem der Ansprüche 1 bis 3, welche ein zweites Trägersubstrat (TS2) umfasst, auf welchem das zweite Substrat (S) angeordnet ist und zumindest teilweise mittels einer Klebeverbindung fixiert ist.

5. Spektrometereinrichtung (10) nach Anspruch 4, wobei das zweite Substrat (S) an einer Unterseite (US) einen ersten Bereich (B1) umfasst und an diesem mit einer Klebeverbindung (KV) am zweiten Trägersubstrat (TS2) montierbar ist.

6. Spektrometereinrichtung (10) nach Anspruch 4 oder 5, wobei das zweite Substrat (S) an einer Unterseite (US) einen zweiten Bereich (B2) umfasst und mit diesem über einen Montageanschlag (M) auf dem zweiten Trägersubstrat (TS2) montierbar ist.

7. Spektrometereinrichtung (10) nach einem der Ansprüche 1 bis 6, bei welcher die Photodetektoreinrichtung (PD) mit einer Bondverbindung (BV) auf dem zweiten Substrat (S) oder auf dem ersten Substrat (K) angeordnet ist.

8. Verfahren zum Herstellen einer Spektrometereinrichtung (10) umfassend die Schritte:
S1) Bereitstellen eines ersten Substrats (K) und/oder eines zweiten Substrats (S) und einer Fabry-Perot-Interferometer-Einheit (FP) mit einem ersten Trägersubstrat (TS1), wobei das erste Trägersubstrat (TS1) an einer Unterseite (U) der Fabry-Perot-Interferometer-Einheit (FP) angeordnet wird und eine optische Apertur (NA) aufweist
S2) Anordnen der Fabry-Perot-Interferometer-Einheit (FP) mit dem ersten Trägersubstrat (TS1) auf dem zweiten Substrat (S), wobei das erste Trägersubstrat (TS1) mit der Unterseite (U) auf dem zweiten Substrat (S) angeordnet wird und Anordnen des ersten Substrats (K) auf der Fabry-Perot-Interferometer-Einheit (FP), wobei das erste Substrat (K) auf einer Oberseite (O) der Fabry-Perot-Interferometer-Einheit (FP) angeordnet wird, welche der Unterseite (U) abgewandt ist, und wobei auf oder in dem zweiten Substrat (S) und auf oder in dem ersten Substrat (K) eine Photodetektoreinrichtung (PD) angeordnet wird oder in diese integriert ist, wobei das erste Substrat (K) ein Kappensubstrat umfasst, mit welchem die Fabry-Perot-Interferometer-Einheit (FP) abgedeckt wird, und das zweite Substrat (S) ein Sockelsubstrat umfasst, auf welchem die Fabry-Perot-Interferometer-Einheit (FP) angebracht wird, wobei die Photodetektoreinrichtung (PD) einen ersten Sensor (S1) umfasst, welcher an einer Lichteinfallsrichtung (L) abgewandten Seite des Kappensubstrats (K) angeordnet ist und sich auf einer optischen Achse (A) durch eine Öffnung (NA) mit einer optischen Apertur befindet; und
S3) elektrisches Kontaktieren eines ersten elektrischen Anschlussbereichs (A1) der Photodetektoreinrichtung (PD) und eines zweiten elektrischen Anschlussbereichs (A2) der Fabry-Perot-Interferometer-Einheit (FP) mit Drahtanschlüssen (DB), wobei das Kontaktieren von einer gleichen Seite aus erfolgt.

9. Verfahren nach Anspruch 8, bei dem nach dem Verfahrensschritt S3 in einem Verfahrensschritt S4 ein Anordnen des zweiten Substrats (S) auf einem zweiten Trägersubstrat (TS2) und zumindest ein teilweises Verkleben des zweiten Substrats (S) mit dem zweiten Trägersubstrat (TS2) erfolgt.

## Claims

1. Spectrometer device (10), comprising:
- a Fabry-Perot interferometer unit (FP), which comprises a first carrier substrate (TS1), wherein the first carrier substrate (TS1) is arranged on a lower side (U) of the Fabry-Perot interferometer unit (FP) and includes an optical aperture (NA);
- a first substrate (K), which is arranged on an upper side (0) of the Fabry-Perot interferometer unit (FP), which faces away from the lower side (U), and a second substrate (S), wherein the first carrier substrate (TS1) is arranged having the lower side (U) on the second substrate (S);
- a photodetector device (PD), which is arranged on or in the second substrate (S) and on or in the first substrate (K), wherein a first electrical connection region (A1) of the photodetector device (PD) and a second electrical connection region (A2) of the Fabry-Perot interferometer unit (FP) can be electrically contacted from the same direction, wherein the first substrate (K) comprises a cap substrate, using which the Fabry-Perot interferometer unit (FP) can be covered, and the second substrate (S) comprises a base substrate, on which the Fabry-Perot interferometer unit (FP) can be attached, wherein the photodetector device (PD) comprises a first sensor (S1), which is arranged on a side of the cap substrate (K) facing away from a light incidence direction (L) and is situated on an optical axis (A) through an opening (NA) with an optical aperture.

2. Spectrometer device (10) according to Claim 1, wherein the optical aperture is formed by an opening in the first carrier substrate (TS1) or an opaque coating on the first carrier substrate (TS1)

3. Spectrometer device (10) according to any of Claims 1 to 2, wherein the first electrical connection region (A1) and the second electrical connection region (A2) face toward or face away from the light incidence direction (L).

4. Spectrometer device (10) according to any of Claims 1 to 3, which comprises a second carrier substrate (TS2), on which the second substrate (S) is arranged and is at least partially fixed by means of an adhesive bond.

5. Spectrometer device (10) according to Claim 4, wherein the second substrate (S) comprises a first region (B1) on a lower side (US) and can be installed thereon using an adhesive bond (KV) on the second carrier substrate (TS2).

6. Spectrometer device (10) according to Claim 4 or 5, wherein the second substrate (S) comprises a second region (B2) on a lower side (US) and can be installed using this via an installation stop (M) on the second carrier substrate (TS2).

7. Spectrometer device (10) according to any of Claims 1 to 6, in which the photodetector device (PD) is arranged using a bond connection (BV) on the second substrate (S) or on the first substrate (K).

8. Method for producing a spectrometer device (10) comprising the following steps:
S1) providing a first substrate (K) and/or a second substrate (S) and a Fabry-Perot interferometer unit (FP) having a first carrier substrate (TS1), wherein the first carrier substrate (TS1) is arranged on a lower side (U) of the Fabry-Perot interferometer unit (FP) and includes an optical aperture (NA);
S2) arranging the Fabry-Perot interferometer unit (FP) having the first carrier substrate (TS1) on the second substrate (S), wherein the first carrier substrate (TS1) is arranged having the lower side (U) on the second substrate (S) and arranging the first substrate (K) on the Fabry-Perot interferometer unit (FP), wherein the first substrate (K) is arranged on an upper side (0) of the Fabry-Perot interferometer unit (FP), which faces away from the lower side (U), and wherein a photodetector device (PD) is arranged on or in the second substrate (S) and on or in the first substrate (K) or is integrated therein, wherein the first substrate (K) comprises a cap substrate, using which the Fabry-Perot interferometer unit (FP) is covered, and the second substrate (S) comprises a base substrate, on which the Fabry-Perot interferometer unit (FP) is attached, wherein the photodetector device (PD) comprises a first sensor (S1), which is arranged on a side of the cap substrate (K) facing away from a light incidence direction (L) and is situated on an optical axis (A) through an opening (NA) with an optical aperture; and
S3) electrically contacting a first electrical connection region (A1) of the photodetector device (PD) and a second electrical connection region (A2) of the Fabry-Perot interferometer unit (FP) using wire connections (DB), wherein the contacting takes place from the same side.

9. Method according to Claim 8, wherein after method step S3, in a method step S4, the second substrate (S) is arranged on a second carrier substrate (TS2) and the second substrate (S) is at least partially adhesively bonded to the second carrier substrate (TS2).

## Revendications

1. Dispositif de spectrométrie (10) comprenant,
- une unité d'interféromètre de Fabry-Pérot (FP) qui comprend un premier substrat porteur (TS1), dans lequel le premier substrat porteur (TS1) est disposé sur une face inférieure (U) de l'unité d'interféromètre de Fabry-Pérot (FP) et présente une ouverture optique (NA) ;
- un premier substrat (K) qui est disposé sur une face supérieure (0) de l'unité d'interféromètre de Fabry-Pérot (FP) et qui est détournée de la face inférieure (U), et un deuxième substrat (S), dans lequel le premier substrat porteur (TS1) est disposé avec la face inférieure (U) sur le deuxième substrat(S) ;
- un dispositif de photodétection (PD) qui est disposé sur ou dans le deuxième substrat (S) et sur ou dans le premier substrat (K), dans lequel une première zone de connexion électrique (A1) du dispositif de photodétection (PD) et une deuxième zone de connexion électrique (A2) de l'unité d'interféromètre de Fabry-Pérot (FP) peuvent être mises en contact électrique à partir de la même direction, dans lequel le premier substrat (K) comprend un substrat capot qui permet de couvrir l'unité d'interféromètre de Fabry-Pérot (FP), et le deuxième substrat (S) comprend un substrat socle sur lequel l'unité d'interféromètre de Fabry-Pérot (FP) peut être placée, dans lequel le dispositif de photodétection (PD) comprend un premier capteur (S1) qui est disposé sur un côté, détourné de la direction d'incidence de la lumière (L), du substrat capot (K) et se trouve sur un axe optique (A) à travers un orifice (NA) avec une ouverture optique.

2. Dispositif de spectrométrie (10) selon la revendication 1, dans lequel l'ouverture optique est formée par un orifice dans le premier substrat porteur (TS1) ou par un revêtement non transparent sur le premier substrat porteur (TS1).

3. Dispositif de spectrométrie (10) selon l'une quelconque des revendications 1 à 2, dans lequel la première zone de connexion électrique (A1) et la deuxième zone de connexion électrique (A2) sont tournées vers ou détournées de la direction d'incidence de la lumière (L).

4. Dispositif de spectrométrie (10) selon l'une quelconque des revendications 1 à 3, qui comprend un deuxième substrat porteur (TS2) sur lequel le deuxième substrat (S) est disposé et fixé au moins partiellement au moyen d'un assemblage collé.

5. Dispositif de spectrométrie (10) selon la revendication 4, dans lequel le deuxième substrat (S) comprend sur une face inférieure (US) une première zone (B1) et peut être montée sur celle-ci sur le deuxième substrat porteur (TS2) à l'aide d'un assemblage collé (KV) .

6. Dispositif de spectrométrie (10) selon la revendication 4 ou 5, dans lequel le deuxième substrat (S) comprend sur une face inférieure (US) une deuxième zone (B2) et peut être montée avec celle-ci sur le deuxième substrat porteur (TS2) par l'intermédiaire d'une butée de montage (M).

7. Dispositif de spectrométrie (10) selon l'une quelconque des revendications 1 à 6, dans lequel le dispositif de photodétection (PD) est disposé sur le deuxième substrat (S) ou sur le premier substrat (K) par un assemblage bonding (BV).

8. Procédé de fabrication d'un dispositif de spectrométrie (10), comprenant les étapes consistant à :
S1) fournir un premier substrat porteur (K) et/ou un deuxième substrat (S) et une unité d'interféromètre de Fabry-Pérot (FP) pourvue d'un premier substrat porteur (TS1), dans lequel le premier substrat porteur (TS1) est disposé sur une face inférieure (U) de l'unité d'interféromètre de Fabry-Pérot (FP) et présente une ouverture optique (NA),
S2) disposer l'unité d'interféromètre de Fabry-Pérot (FP) pourvue du premier substrat porteur (TS1) sur le deuxième substrat (S), dans lequel le premier substrat porteur (TS1) est disposé avec la face inférieure (U) sur le deuxième substrat (S), et disposer le premier substrat (K) sur l'unité d'interféromètre de Fabry-Pérot (FP), dans lequel le premier substrat (K) est disposé sur une face supérieure (0) de l'unité d'interféromètre de Fabry-Pérot (FP) qui est détournée de la face inférieure (U), et dans lequel un dispositif de photodétection (PD) est disposé sur ou dans le deuxième substrat (S) ou disposé sur ou dans le premier substrat (K) ou est intégré dans ceux-ci, dans lequel le premier substrat (K) comprend un substrat capot qui couvre l'unité d'interféromètre de Fabry-Pérot (FP), et le deuxième substrat (S) comprend un substrat socle sur lequel est placée l'unité d'interféromètre de Fabry-Pérot (FP), dans lequel le dispositif de photodétection (PD) comprend un premier capteur (S1) qui est disposé sur un côté, détourné de la direction d'incidence de la lumière (L), du substrat capot (K) et se trouve sur un axe optique (A) à travers un orifice (NA) avec une ouverture optique ; et
S3) mise en contact électrique d'une première zone de connexion électrique (A1) du dispositif de photodétection (PD) et d'une deuxième zone de connexion électrique (A2) de l'unité d'interféromètre de Fabry-Pérot (FP) pourvue de connexions câblées (DB), la mise en contact étant effectuée à partir du même côté.

9. Procédé selon la revendication 8, dans lequel après l'étape de procédé S3, dans une étape de procédé S4, une disposition du deuxième substrat (S) sur un deuxième substrat porteur (TS2) et au moins un collage partiel du deuxième substrat (S) avec le deuxième substrat porteur (TS2) sont effectués.
